# DEMANDE DE BREVET EUROPEEN

(11) **EP 1 557 603 A1**
(43) Date de publication de la demande: **27.07.2005**
(21) Numéro de dépôt: 05290135.2
(22) Date de dépôt: 21.01.2005
(51) Int. Cl.: F16M 11/24, A47F 5/10

(54) **Dispositif de support d'élément(s), notamment d'affichage, à bras de liaison en porte à faux**

(30) Priorité: 23.01.2004 FR 0400653
(71) Demandeur: Etablissements G. Duflot, 02760 Holnon (FR)
(72) Inventeur: Grenglet, Daniel Henri, 02100 Saint-Quentin (FR)
(74) Mandataire: Bezault, Jean

(57) **Abrégé**

Un dispositif (D) est dédié au support d'élément(s) (E), comme par exemple des écrans d'affichage. Ce dispositif (D) comprend i) un bras de liaison (BL) comportant une première extrémité (EB1) solidarisée à un élément (E) à supporter et une seconde extrémité (EB2) sensiblement linéaire et présentant une section transverse sensiblement rectangulaire définie par une largeur choisie et une hauteur choisie, et ii) une structure de support (SS) comportant au moins une zone évidée (ZE) la traversant et débouchant sur un couple de première (O1) et seconde (O2) ouvertures de surface sensiblement rectangulaire définie par une largeur plus grande que la largeur de la section transverse de la seconde extrémité (EB2) et une hauteur plus grande, d'une première valeur (d1) choisie, que la hauteur de la section transverse de la seconde extrémité (EB2). La première ouverture (O1) est décalée vers le haut par rapport à la seconde ouverture (O2) de la première valeur choisie (d1), de manière à être partiellement en regard de cette dernière et à permettre l'immobilisation de la seconde extrémité (EB2), après qu'elle ait traversée la structure (SS) via la zone évidée (ZE) et la paire d'ouvertures (O1, O2), par un effet de porte à faux au niveau des première (O1) et seconde (O2) ouvertures.

## Description

L'invention concerne le domaine des éléments d'affichage, et plus précisément les dispositifs permettant de supporter de tels éléments.

On entend ici par "élément d'affichage" tout élément permettant d'afficher ou de présenter des données, et notamment les écrans d'ordinateur ou de télévision, les panneaux d'affichage lumineux (par exemple à cristaux liquides (LCD) ou à plasma), et les pupitres.

De nombreux types de dispositifs permettent de supporter un élément du type précité. Ils sont pour la plupart d'entre eux constitués d'un pied de support comportant un socle prolongé par un support, parfois incliné par rapport à la direction verticale, et auquel est solidarisé un élément à supporter, par l'intermédiaire de moyens de fixation présentant un ou deux degrés de liberté (horizontal et vertical).

Afin d'être suffisamment stable, un tel socle doit présenter des dimensions relativement importantes, ce qui le rend encombrant, notamment lorsqu'il est posé sur un bureau. En outre, les moyens de fixation sont fréquemment constitués d'une tête sphérique et d'une cavité sphérique, qui ne peuvent être assemblés et coopérer ensemble que si leurs tolérances respectives sont très faibles. Par ailleurs, ce type de dispositif de support ne permet généralement pas de supporter plus d'un élément.

L'invention a pour but d'offrir un autre type de dispositif de support d'élément(s), remédiant à tout ou partie des inconvénients précités.

Elle propose à cet effet un dispositif de support d'élément(s), comprenant :
- au moins un bras de liaison comportant une première extrémité destinée à être solidarisée à un élément à supporter et une seconde extrémité sensiblement linéaire et présentant une section transverse sensiblement rectangulaire, définie par une largeur choisie et une hauteur choisie, et
- une structure de support comportant au moins une zone évidée la traversant et débouchant sur un couple de première et seconde ouvertures de surface sensiblement rectangulaire définies, d'une part, par une largeur plus grande que la largeur de la section transverse de la seconde extrémité, et d'autre part, par une hauteur plus grande, d'une première valeur choisie, que la hauteur de la section transverse de la seconde extrémité, la première ouverture étant décalée vers le haut par rapport à la seconde ouverture d'une valeur égale à la première valeur choisie, de manière à être partiellement en regard de cette dernière et à permettre l'immobilisation de la seconde extrémité, après qu'elle ait traversée la structure via la zone évidée et la paire d'ouvertures, par un effet de porte à faux au niveau des première et seconde ouvertures.

La seconde extrémité du bras de liaison est donc introduite dans la tige de support de façon inclinée afin de pouvoir la traverser via ses ouvertures décalées verticalement, puis l'élément à supporter pesant sur la première extrémité du bras de liaison il place ce dernier en porte à faux, l'immobilisant ainsi au niveau du bord inférieur de la première ouverture et du bord supérieur de la seconde ouverture.

Le dispositif selon l'invention peut être réalisé selon de nombreuses variantes, dont certaines au moins des caractéristiques peuvent être combinées entre-elles, et notamment :
- les largeurs des première et seconde ouvertures peuvent être plus grandes, d'au moins une seconde valeur choisie, que la largeur de la section transverse de la seconde extrémité. Ainsi, la seconde extrémité peut être désorientée par rapport à la direction normale aux première et seconde ouvertures d'un angle inférieur ou égal à un angle maximal fonction de la seconde valeur choisie,
- les première et seconde ouvertures peuvent être sensiblement identiques,
- la structure de support peut comporter au moins deux zones évidées la traversant et débouchant chacune sur un couple de première et seconde ouvertures. Ainsi, elle peut supporter plusieurs éléments par l'intermédiaire de plusieurs bras de support. Par exemple, les couples de première et seconde ouvertures sont placés les uns aux dessus des autres,
- la seconde extrémité de certains au moins des bras de support peut comporter une face dite supérieure, munie dans une partie terminale d'une butée faisant saillie sur une hauteur inférieure à la première valeur,
- la structure peut être agencée sous la forme d'une tige de support pouvant être solidarisée à un "organe", comme par exemple un plateau d'un meuble de bureau,
- la tige de support peut présenter une section sensiblement rectangulaire,
- la tige de support peut être monobloc et évidée à l'intérieur,
- la tige de support peut être solidarisée à une embase pouvant être éventuellement solidarisée à un organe par l'intermédiaire de moyens de fixation,
- la tige de support peut comprendre une extrémité solidarisée fixement à une première extrémité d'une tige auxiliaire, sensiblement à 90°, formant ainsi une équerre. La tige auxiliaire est alors agencée de manière à reposer sur un plateau sensiblement plan de l'organe et comprend une seconde extrémité opposée à sa première extrémité et munie d'une partie conformée, sensiblement en forme de L orienté vers la première extrémité, et pouvant recevoir étroitement un bord du plateau,
- en variante, la tige de support peut être constituée de première et seconde parties complémentaires assemblées et dans lesquelles sont respectivement définies les premières ouvertures et les secondes ouvertures. Dans ce cas, les première et seconde parties peuvent être assemblées l'une à l'autre, par l'une de leurs deux extrémités opposées, par l'intermédiaire d'un axe de rotation. Ces première et seconde parties peuvent, par ailleurs, comporter chacune une extrémité munie d'une partie terminale recourbée vers l'intérieur de la cavité, sensiblement à 90°. Ces deux parties terminales définissent alors, avec des parties latérales des première et seconde parties, deux parties complémentaires d'un logement (ouvert) destiné à recevoir une partie d'un rail solidarisé à l'organe, en vue de la solidarisation de la tige de support à cet organe. On peut également prévoir des moyens de fixation afin de solidariser l'une à l'autre les extrémités des première et seconde parties, en amont des parties terminales, en vue d'immobiliser la tige de support sur le rail,
- la structure de support peut être réalisée dans un matériau métallique,
- le bras de liaison peut être une tige sensiblement linéaire,
- le bras de liaison peut comprendre une première extrémité, opposée à sa seconde extrémité, et munie d'un axe de rotation sur lequel est monté l'élément à supporter,
- le bras de liaison peut être réalisé dans un matériau métallique,
- l'élément peut être choisi parmi les écrans d'ordinateur ou de télévision (également appelés moniteurs), et les panneaux d'affichage de données d'information et/ou de publicité.

L'invention concerne également un meuble de bureau comprenant au moins un organe et au moins un dispositif de support du type de celui présenté ci-avant et destiné à être solidarisé à cet organe.

D'autres caractéristiques et avantages de l'invention apparaîtront à l'examen de la description détaillée ci-après, et des dessins annexés, sur lesquels :
- la figure 1 illustre de façon schématique, dans une vue en perspective, une partie d'un premier exemple de réalisation d'un dispositif de support selon l'invention, à tige de support de type monobloc et solidarisé à une embase de fixation,
- la figure 2 illustre de façon schématique, dans une vue en coupe longitudinale, le premier exemple de réalisation de dispositif de support de la figure 1,
- la figure 3 illustre de façon schématique, dans une vue en perspective, un exemple de réalisation d'un bras de liaison pour un dispositif de support selon l'invention,
- la figure 4 illustre de façon schématique, dans une vue en perspective, un exemple de réalisation de patte de fixation d'élément,
- la figure 5 illustre de façon schématique, dans une vue de face, un exemple de réalisation d'une partie d'une tige de support d'un dispositif de support selon l'invention, au niveau d'un couple de première et seconde ouvertures,
- la figure 6 illustre de façon schématique, dans une vue en coupe transversale, les deux positions extrêmes que peut prendre un bras de liaison d'un dispositif de support selon l'invention dans une tige de support de type monobloc,
- la figure 7 illustre de façon schématique, dans une vue de côté, une variante de premier exemple de réalisation dans laquelle le dispositif de support selon l'invention est solidarisé à une tige auxiliaire de fixation,
- les figures 8A et 8B illustrent de façon schématique, dans des vues en perspective, les première et seconde parties d'une tige de support de type assemblé,
- la figure 9 illustre de façon schématique, dans une vue en perspective, l'assemblage des première et seconde parties de la tige de support des figures 8A et 8B,
- la figure 10 illustre de façon schématique, dans une vue en coupe transversale, le mode de solidarisation de la tige de support, des figures 8 et 9, à un rail, et
- les figures 11 et 12 illustrent respectivement, dans des vues en perspective avant et arrière, deux dispositifs de support selon l'invention installés sur un meuble de bureau, et équipés de tiges de support de type assemblé.

Les dessins annexés pourront non seulement servir à compléter l'invention, mais aussi contribuer à sa définition, le cas échéant.

L'invention concerne un dispositif de support d'élément(s) d'affichage (ou de présentation).

Comme indiqué dans la partie introductive, on entend ici par "élément d'affichage" tout élément permettant d'afficher ou de présenter des données, et notamment les écrans d'ordinateur ou de télévision, les panneaux d'affichage lumineux (par exemple à cristaux liquides (LCD) ou à plasma), et les pupitres.

Dans ce qui suit on considérera, à titre d'exemple illustratif, que les éléments sont des écrans d'ordinateur ou de télévision (également appelés "moniteurs"), par exemple de type "plat".

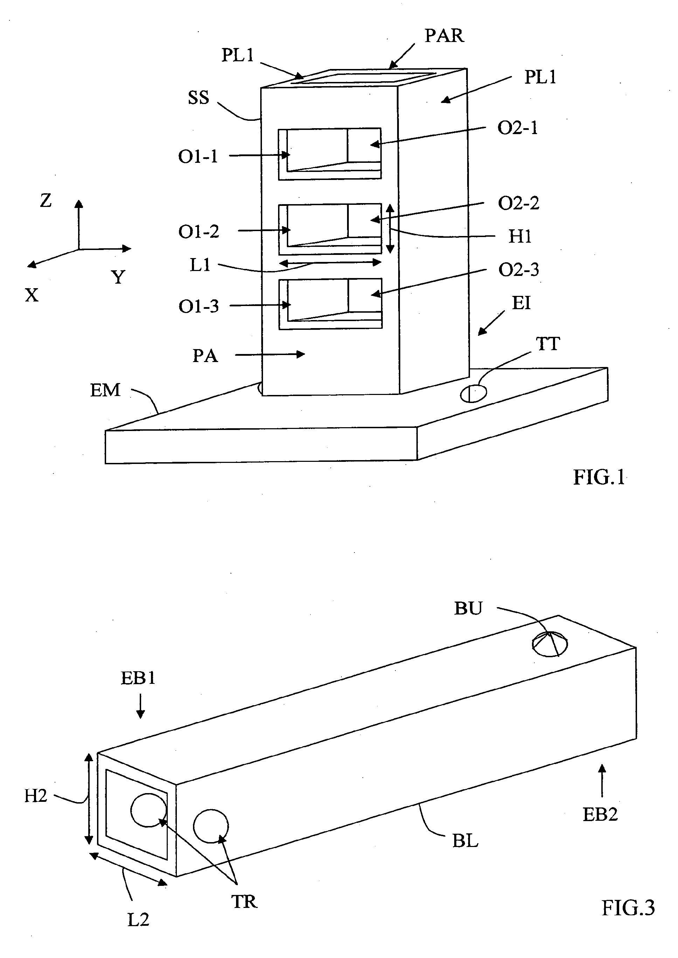

On se réfère tout d'abord aux figures 1 à 6 pour décrire un premier exemple de réalisation d'un dispositif de support D, selon l'invention.

Un dispositif D selon l'invention comprend une structure de support SS destinée à être solidarisée à un organe O, comme par exemple un plateau d'un meuble de bureau. Dans cet exemple, la structure de support SS est de type monobloc. Elle est ici réalisée sous la forme d'une tige de support, préférentiellement évidée, par exemple de section transverse rectangulaire. Cette tige de support SS est définie par une paroi avant PAV, une paroi arrière PAR, et deux parois latérales PL1 et PL2.

La structure de support SS est par exemple réalisée en matériau métallique. Mais, bien entendu, d'autres types de matériau résistant peuvent être envisagés.

Selon l'invention, la tige de support SS comporte au moins un couple de première O1-i et seconde O2-i ouvertures traversantes. Ici, elle comporte trois paires (i = 1 à 3), mais elle peut en comporter autant que l'on veut.

Dans l'exemple illustré, la paroi avant PAV comprend les premières ouvertures traversantes O1-1 à O1-3, sensiblement alignées les unes au-dessus des autres (bien que cela ne soit pas obligatoire), tandis que la paroi arrière PAR comprend les trois secondes ouvertures traversantes O2-1 à O2-3, également sensiblement alignées les unes au-dessus des autres lorsque c'est le cas des premières ouvertures O1-i. La première ouverture O1-i d'un couple i doit en effet être placée sensiblement (et partiellement) en regard de la seconde ouverture O2-i dudit couple, pour une raison qui sera évoquée plus loin.

Selon l'invention, chaque première O1-i et chaque seconde O2-i ouverture présente une surface sensiblement rectangulaire. Cette surface est définie par une largeur L1 choisie (suivant une direction horizontale Y) et une hauteur H1 choisie (suivant une direction verticale Z).

Il est par ailleurs préférable, bien que non obligatoire, que les surfaces des première O1-i et seconde O2-i ouvertures d'un couple soient sensiblement identiques. En outre, il est important de noter que les surfaces des premières ouvertures O1-i peuvent varier d'un couple à l'autre, et qu'il en va de même de celles des secondes ouvertures O2-i.

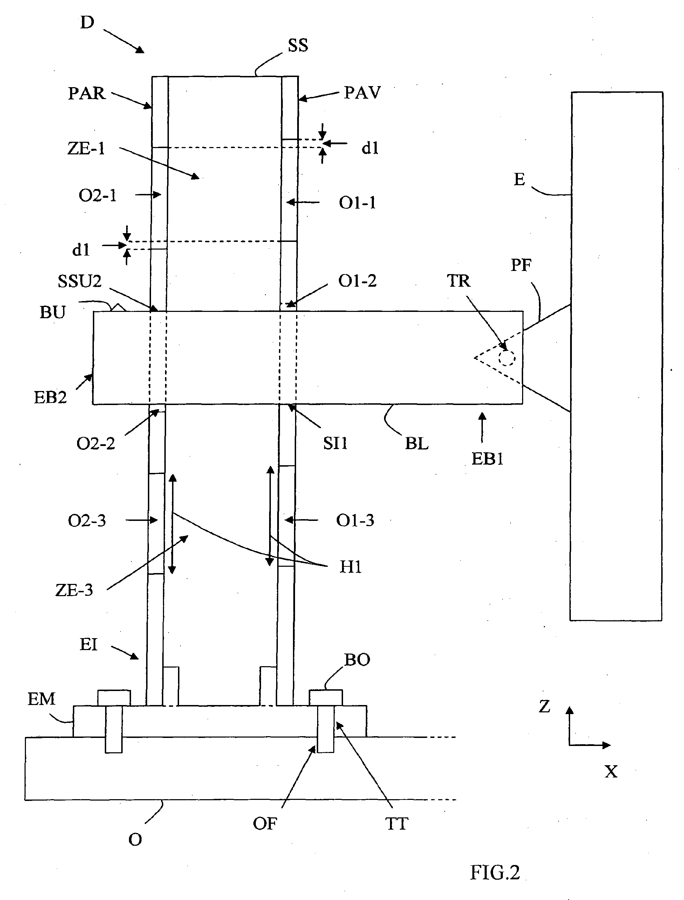

Comme cela est illustré sur la figure 2, la structure de support (ici une tige) SS comprend également au moins un bras de liaison BL comportant une première extrémité EB1, destinée à être solidarisée à un élément à supporter (ici un écran plat) E, et une seconde extrémité EB2, sensiblement linéaire et présentant une section transverse sensiblement rectangulaire, définie par une largeur L2 choisie (suivant Y), inférieure à L1, et une hauteur H2 choisie (suivant Z), inférieure à H1.

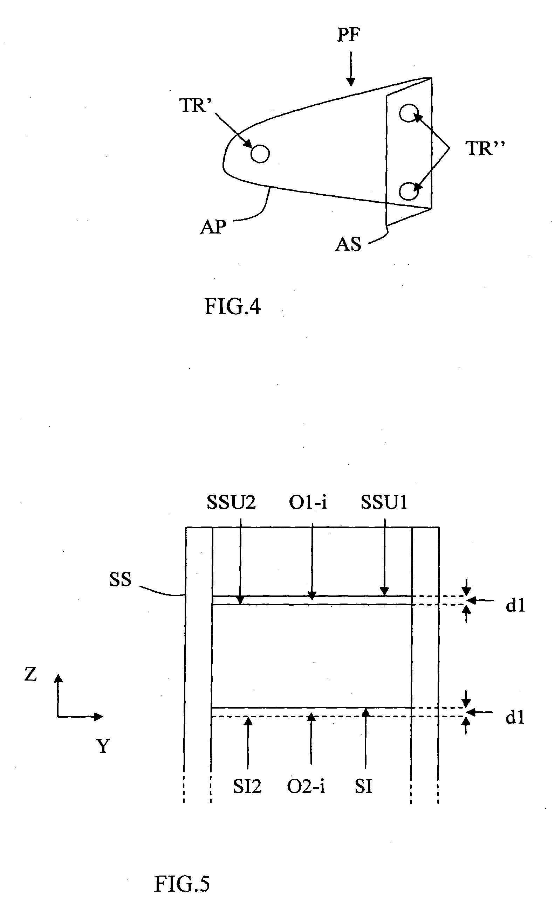

Par exemple, le bras de liaison BL est intégralement linéaire et de section sensiblement constante, comme illustré sur les figures 2 et 3. Mais, il pourrait en être autrement.

Le bras de liaison BL est par exemple réalisé en matériau métallique. Mais, bien entendu, d'autres types de matériau résistant peuvent être envisagés.

La première extrémité EB1 est de préférence solidarisée à l'écran plat E par l'intermédiaire de pattes de fixation PF, par exemple du type de celle illustrée sur la figure 4. Plus précisément, dans l'exemple illustré sur les figure 2 et 4, la première extrémité EB1 du bras de liaison BL comprend, sur des parois latérales (dans le plan XZ), deux trous TR permettant le passage d'un axe de rotation (non représenté) sur lequel sont montés les deux pattes de fixation PF, grâce à un trou TR' formé à l'extrémité de leur aile principale AP. Les deux pattes de fixation PF sont par ailleurs solidarisées à l'écran plat E par une aile secondaire AS comportant de préférence deux trous TR" et prolongeant de façon sensiblement perpendiculaire leur aile principale AP, et des moyens de fixation, comme par exemple des boulons (non représentés), traversant les deux trous TR". Grâce à ce type de montage, il est possible d'entraîner en rotation l'écran plat E autour de l'axe de rotation porté par la première extrémité EB1 du bras de liaison BL. Bien entendu, tout autre type de fixation, y compris statique ou multidirectionnel, peut être envisagé moyennant d'autres types de moyens de fixation.

La seconde extrémité EB2 du bras de liaison BL est destinée à être introduite dans la tige de support SS, au niveau d'une première ouverture O1-i de l'un des couples i, puis à traverser la partie évidée dudit bras de liaison BL, au niveau d'une zone évidée ZE-i, afin de traverser la seconde ouverture O2-i associée à la première ouverture O1-i au sein dudit couple i.

Il est important de noter qu'en présence d'une structure de support SS qui n'est pas entièrement évidée, on prévoit une zone évidée ZE-i entre les première O1-i et seconde O2-i ouvertures de chaque couple i, de manière à permettre la traversée de la seconde extrémité EB2 du bras de liaison BL.

Toujours selon l'invention, et comme cela est illustré sur les figures 2 et 4, d'une part, la hauteur H1 des ouvertures O1 et O2 est supérieure d'une première valeur d1 choisie à la hauteur H2 du bras de liaison BL, et d'autre part, chaque première ouverture O1-i est décalée vers le haut par rapport à la seconde ouverture O2-i associée d'une valeur égale à la première valeur choisie d1. C'est pour cette raison que chaque première ouverture O1-i n'est que partiellement en regard de la seconde ouverture O2-i associée.

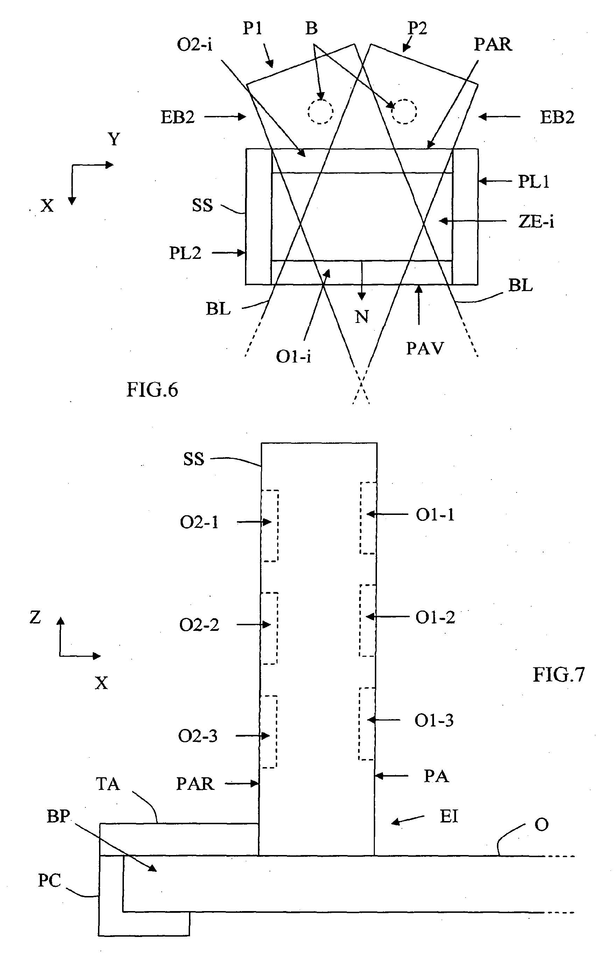

Du fait de ce décalage d1, la seconde extrémité EB2 du bras de liaison BL doit être introduite de façon légèrement inclinée dans les ouvertures O1-i et O2-i. Une fois que la seconde extrémité EB2 du bras de liaison BL a traversé de part en part la tige de support SS (et donc qu'elle fait saillie hors de la seconde ouverture O2-i), on peut se dessaisir de la première extrémité EB1 solidarisée à l'écran plat E. La première extrémité EB1 est alors entraînée vers le bas par le poids de l'écran plat E, tandis que dans le même temps la seconde extrémité EB2 est entraînée vers le haut par effet de bascule. Le bras de liaison BL est alors immobilisé dans une position de porte à faux au niveau de la surface inférieure SI1 de la première ouverture O1-i et de la surface supérieure SSU2 de la seconde ouverture O2-i (voir figures 2 et 5). La surface inférieure SI2 de la seconde ouverture O2-i et la surface supérieure SSU1 de la première ouverture O1-i sont alors libres.

Comme cela est illustré sur la figure 6, la largeur L1 des premières O1-i et secondes O2-i ouvertures peut être choisie supérieure à la largeur L2 de la seconde extrémité EB2 du bras de liaison BL, d'une seconde valeur choisie d2, afin de permettre sa désorientation par rapport à la normale N aux ouvertures. Dans cette configuration, la seconde extrémité EB2 peut en effet être désorientée entre deux positions extrêmes P1 et P2, permettant ainsi une désorientation de l'écran plat E par rapport à la normale N et donc à la tige de support SS. Ces positions extrêmes de désorientation correspondent à un angle maximal de désorientation fonction de la seconde valeur choisie d2.

Par ailleurs, et comme cela est illustré sur les figures 2 et 6, la seconde extrémité EB2 du bras de liaison BL peut comporter un moyen de blocage BU destiné à empêcher le déplacement horizontal du bras de liaison BL une fois celui-ci installé en porte à faux. Par exemple, et comme illustré, le moyen de blocage BU peut être réalisé sous la forme d'une butée placée sur la face supérieure de la seconde extrémité EB2 du bras de liaison BL. Afin de ne pas empêcher l'introduction de la seconde extrémité EB2 dans les ouvertures O1-i et O2-i, la butée BU doit présenter une hauteur inférieure à la première valeur choisie d1. Bien entendu, tout autre moyen de blocage connu de l'homme de l'art peut être envisagé.

L'immobilisation par un effet de port à faux ne peut survenir qu'à condition que le dispositif de support D ait été préalablement solidarisé à un organe O, comme illustré sur la figure 2. A cet effet, on peut utiliser une embase EM, du type de celle illustrée sur les figures 1 et 2, solidarisée à l'extrémité inférieure EI de la structure (ou tige) de support SS.

Cette embase EM peut être solidarisée à la structure de support SS de façon définitive, par exemple par soudage, ou de façon momentanée, par exemple à l'aide de moyens de fixation, tels que des boulons. Dans ce cas, et comme illustré sur la figure 2, l'embase EM doit être solidarisée à un organe O, par exemple le plateau supérieur d'un meuble de bureau, par l'intermédiaire de moyens de fixation, tels que des boulons BO traversant des trous TT formés dans l'embase EM et coopérant avec des orifices filetés OF formés dans ledit organe O.

En variante, l'embase EM peut faire partie de l'organe O. Dans ce cas, la structure (ou tige) de support SS peut être solidarisée à l'embase EM par tout moyen de fixation approprié, connu de l'homme de l'art.

Dans une autre variante illustrée sur la figure 7, la structure (ou tige) de support SS peut être solidarisée à l'organe O par une tige auxiliaire TA, sensiblement perpendiculaire à la partie terminale de l'extrémité inférieure EI de sa paroi arrière PAR. La structure de support SS et la tige auxiliaire TA définissent alors une espèce d'équerre.

Cette tige auxiliaire TA est pourvue à son extrémité, opposée à la structure de support SS, d'une partie conformée PC, sensiblement en forme de L orienté en direction du plan contenant la paroi arrière PAR. Cette partie conformée PC est par exemple obtenue par un double repliement de la partie d'extrémité de la tige auxiliaire TA. Sa portion verticale est choisie sensiblement égale, par valeur supérieure, à l'épaisseur du bord BP du panneau de l'organe O, sur lequel doit être installé le dispositif de support D, de manière à recevoir étroitement ce bord BP. Afin de renforcer l'immobilisation de la structure de support SS par rapport à l'organe E, on peut prévoir des moyens de fixation complémentaires, comme par exemple un boulon installé sur l'aile horizontale de la partie conformée PC et terminé soit par une partie filetée destinée à coopérer avec un orifice fileté formé sous le bord BP du panneau de l'organe O, soit par une tête plate.

La partie complémentaire PC peut être solidarisée à la structure de support SS de façon définitive, par exemple par soudage, ou de façon provisoire, par exemple à l'aide de moyens de fixation, tels que des boulons.

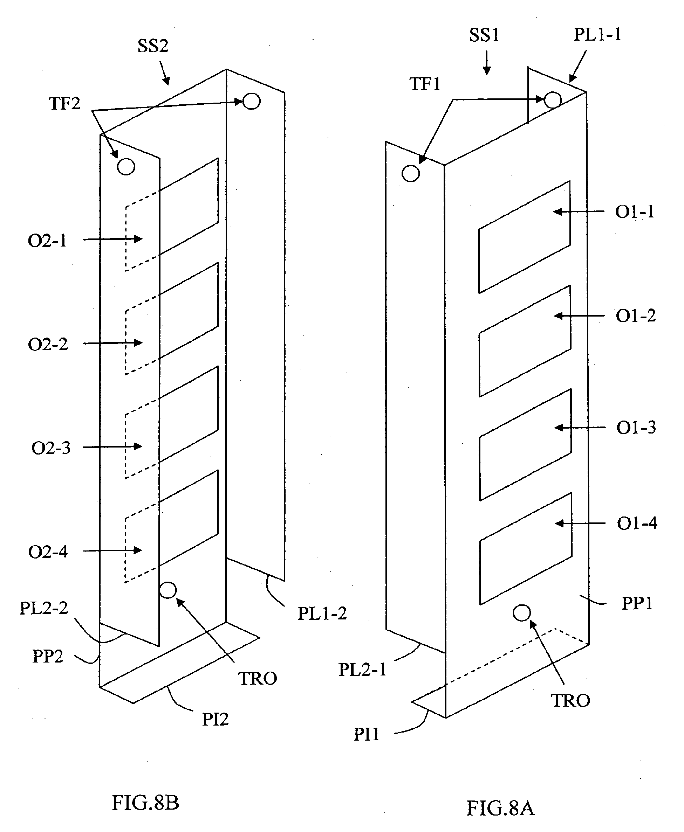

On se réfère maintenant aux figures 8 à 12 pour décrire un second exemple de réalisation d'un dispositif de support D, selon l'invention.

Ce second mode de réalisation diffère du premier, décrit ci-avant en référence aux figures 1 à 7, par l'agencement du support de structure SS. Ici, le support de structure SS n'est plus de type monobloc. Il est réalisé par assemblage de deux parties SS1 et SS2. Tout ce qui a été dit précédemment à propos du bras de liaison BL, du mode de solidarisation de l'écran E au bras de liaison BL, et des première(s) O1-i et seconde(s) O2-i ouvertures s'applique donc ici.

Comme cela est illustré sur les figures 8A et 8B, le support de structure SS comporte ici une première partie SS1 dans laquelle sont réalisées les premières ouvertures O1-i et une seconde partie SS2 dans laquelle sont réalisées les secondes ouvertures O2-i.

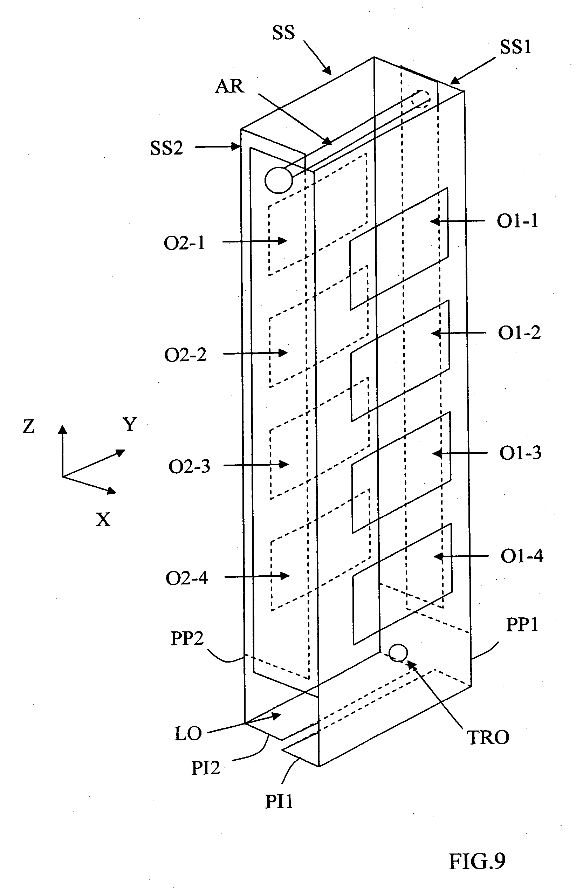

Plus précisément, la première partie SS1 comporte une paroi principale PP1 constituant la paroi avant (PAV) de la structure de support SS et prolongée, d'une part, sur chacun de ses deux bords latéraux verticaux (suivant Z), sensiblement à 90°, par deux parois latérales PL1-1 et PL2-1, et d'autre part, au niveau de son extrémité inférieure, également sensiblement à 90°, par une paroi inférieure PI1. Par ailleurs, chaque paroi latérale PLI-1 et PL2-1 comporte au niveau de son extrémité supérieure un trou TF1 destiné à permettre le passage d'un axe de rotation AR (voir figure 9). Cette première partie SS1 définit ici une espèce de profilé réalisé par pliage.

La seconde partie SS2 comporte une paroi principale PP2 constituant la paroi arrière (PAR) de la structure de support SS et prolongée, d'une part, sur chacun de ses deux bords latéraux verticaux (suivant Z), sensiblement à 90°, par deux parois latérales PL1-2 et PL2-2, et d'autre part, au niveau de son extrémité inférieure, également sensiblement à 90°, par une paroi inférieure PI2. Par ailleurs, chaque paroi latérale PL1-2 et PL2-2 comporte au niveau de son extrémité supérieure un trou TF2 destiné à permettre le passage de l'axe de rotation AR. Cette seconde partie SS2 définit ici une espèce de profilé réalisé par pliage. Par ailleurs, la largeur (suivant Y) de la seconde partie SS2 est légèrement inférieure à celle de la première partie SS1, afin que ses parois latérales PL1-2 et PL2-2 puissent être logées dans l'espace vide délimité par la paroi principale PP1 et les parois latérales PL1-1 et PL2-1 de la première partie SS1. Mais, la situation inverse peut être envisagée.

Comme illustré sur la figure 9, la première partie SS1 et la seconde partie SS2 sont assemblées l'une à l'autre par l'intermédiaire de l'axe de rotation AR qui traverse les trous TF1 et TF2 placés au niveau de l'extrémité supérieure de leurs parois latérales PL.

La solidarisation de la structure de support SS à un organe O, par exemple un plateau d'un meuble de bureau, s'effectue comme indiqué ci-après.

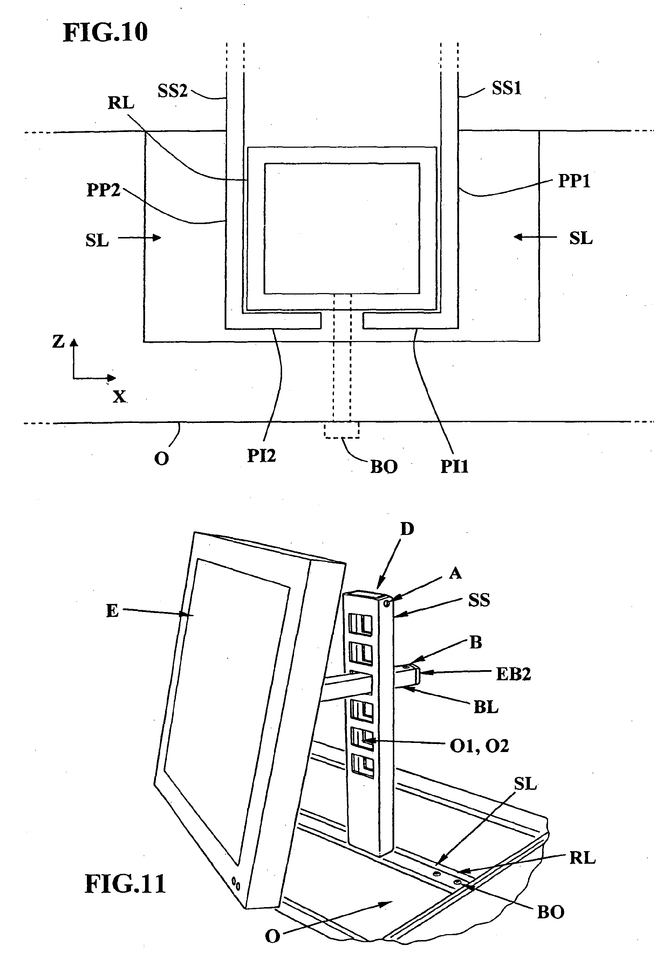

Comme illustré sur la figure 10, l'organe O doit comporter un rail RL solidarisé à son plateau, par exemple par l'intermédiaire de boulons BO. Ce rail RL présente une section transverse sensiblement rectangulaire, de dimensions adaptées aux dimensions du logement ouvert LO délimité par les parois inférieures PI1 et PI2 et les parois latérales PL-1 et PL-2 des première SS1 et seconde SS2 parties du support de structure SS.

Préférentiellement, le rail RL est logé à l'intérieur d'un sillon SL formé dans la partie supérieure du plateau de l'organe O. La largeur du sillon SL (suivant X) est alors choisie en fonction de la largeur (suivant X) du rail RL et la longueur (suivant X) des parois inférieures PI1 et PI2 des première SS1 et seconde SS2 parties du support de structure SS. Le rail RL est centré dans le sillon SL et surélevé par rapport à son fond, afin que les parois inférieures PI1 et PI2 des première SS1 et seconde SS2 parties puissent pénétrer dans ledit sillon SL en longeant les parois latérales du rail RL, puis passer sous sa paroi inférieure. Une fois cette opération effectuée, on rapproche les extrémités inférieures EI des première SS1 et seconde SS2 parties du support de structure SS, afin que leurs parois principales PP1 et PP2 soient sensiblement parallèle entre elles. Le rail RL se trouve alors logé à l'intérieur du logement LO, et par conséquent la structure de support SS est solidarisée par rapport à l'organe O.

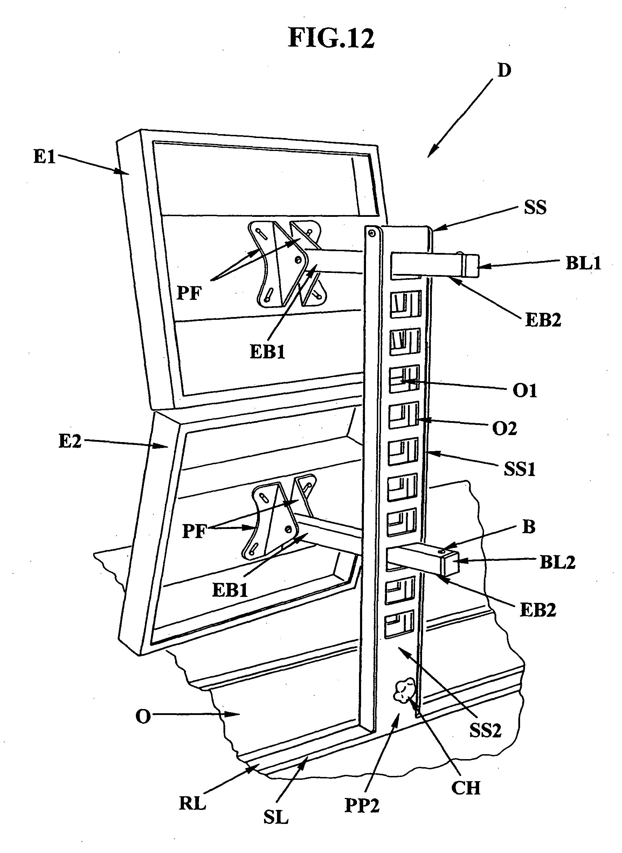

Afin de renforcer cette solidarisation, on peut prévoir des moyens d'immobilisation, comme par exemple un "cluser à tête", éventuellement de type hexagonal. Dans ce cas, on forme au niveau de l'extrémité inférieure de la paroi principale PP1, PP2 des première SS1 et seconde SS2 parties du support de structure SS un trou hexagonal fileté TRO permettant le passage d'un axe fileté muni d'une tête CH (voir figure 12) destiné à les solidariser l'une à l'autre par vissage.

On a représenté sur les figures 11 et 12 deux exemples de dispositif de support D installé sur le rail RL d'un plateau O de meuble de bureau, et comprenant chacun un support de structure SS à deux parties assemblées SS1 et SS2, du type de celui décrit ci-avant,. Plus précisément, le premier exemple (figure 11) illustre, dans une vue avant, un support de structure SS comportant six couples de première O1-i et seconde O2-i ouvertures et supportant un bras de liaison BL solidarisé à un écran plat E. Le second exemple (figure 12) illustre, dans une vue arrière, un support de structure SS de grande dimension, comportant onze couples de première O1-i et seconde O2-i ouvertures et supportant deux bras de liaison BL1 et BL2 solidarisés à deux écrans plats E1 et E2 présentant des orientations différentes.

Il est important de noter que l'on peut solidariser plusieurs dispositifs de support D, selon l'invention, sur un même rail RL.

L'invention ne se limite pas aux modes de réalisation de dispositif de support D et de meuble de bureau décrits ci-avant, seulement à titre d'exemple, mais elle englobe toutes les variantes que pourra envisager l'homme de l'art dans le cadre des revendications ci-après.

Ainsi, dans ce qui précède on a décrit un dispositif de support d'élément(s) muni d'une structure de support constituant un pied permettant sa solidarisation à un organe tel qu'un plateau de meuble de bureau. Mais, on peut envisager des structures de support fixées sur un organe tel qu'un mur et non sur un organe de type plateau de meuble de bureau.

## Revendications

1. Dispositif (D) de support d'éléments) (E), **caractérisé en ce qu'**il comprend i) un bras de liaison (BL) comportant une première extrémité (EB1) propre à être solidarisée à un élément (E) à supporter et une seconde extrémité (EB2) sensiblement linéaire et présentant une section transverse sensiblement rectangulaire définie par une largeur (L2) choisie et une hauteur (H1) choisie, et ii) une structure de support (SS) comportant au moins une zone évidée (ZE) la traversant et débouchant sur un couple de première (O1 ) et seconde (O2) ouvertures de surface sensiblement rectangulaire définie par une largeur (L1) plus grande que la largeur (L2) de la section transverse de la seconde extrémité (EB2) et une hauteur (H1) plus grande, d'une première valeur (d1) choisie, que la hauteur (H2) de la section transverse de la seconde extrémité (EB2), ladite première ouverture (O1) étant décalée vers le haut par rapport à ladite seconde ouverture (O2) de ladite première valeur choisie (d1), de manière à être partiellement en regard de cette dernière et à permettre l'immobilisation de ladite seconde extrémité (EB2), après qu'elle ait traversée ladite structure (SS) via ladite zone évidée (ZE) et ladite paire d'ouvertures (O1, O2), par un effet de porte à faux au niveau desdites première (O1) et seconde (O2) ouvertures.

2. Dispositif selon la revendication 1, **caractérisé en ce que** les largeurs (L1) desdites première (O1) et seconde (O2) ouvertures sont plus grandes, d'au moins une seconde valeur choisie, que la largeur (L2) de la section transverse de la seconde extrémité (EB2), de sorte que ladite seconde extrémité (EB2) puisse être désorientée par rapport à une direction normale auxdites première (O1 et seconde (O2) ouvertures d'un angle inférieur ou égal à un angle maximal fonction de ladite seconde valeur choisie.

3. Dispositif selon l'une des revendications 1 et 2, **caractérisé en ce que** lesdites première (O1) et seconde (O2) ouvertures d'un couple sont sensiblement identiques.

4. Dispositif selon l'une des revendications 1 à 3, **caractérisé en ce que** ladite structure de support (SS) comporte au moins deux zones évidées (ZE) la traversant et débouchant chacune sur un couple de première (O1) et seconde (O2) ouvertures.

5. Dispositif selon la revendication 4, **caractérisé en ce que** lesdits couples de première (O1) et seconde (O2) ouvertures sont placés les uns aux dessus des autres.

6. Dispositif selon l'une des revendications 1 à 5, **caractérisé en ce que** ladite seconde extrémité (EB2) comporte une face dite supérieure munie dans une partie terminale d'une butée (BU) faisant saillie sur une hauteur inférieure à ladite première valeur (d1).

7. Dispositif selon l'une des revendications 1 à 6, **caractérisé en ce que** ladite structure de support (SS) est agencée sous la forme d'une tige de support propre à être solidarisée à un "organe" (O).

8. Dispositif selon la revendication 7, **caractérisé en ce que** ladite tige de support (SS) présente une section sensiblement rectangulaire.

9. Dispositif selon l'une des revendications 7 et 8, **caractérisé en ce que** ladite tige de support (SS) est monobloc et évidée à l'intérieur.

10. Dispositif selon l'une des revendications 7 à 9, **caractérisé en ce que** ladite tige de support (SS) est solidarisée à une embase (EM) propre à être solidarisée audit organe (O) par des moyens de fixation (BO).

11. Dispositif selon l'une des revendications 7 à 9, **caractérisé en ce que** ladite tige de support (SS) comprend une extrémité solidarisée fixement à une première extrémité d'une tige auxiliaire (TA), sensiblement à 90°, ladite tige auxiliaire (TA) étant agencée de manière à reposer sur un plateau sensiblement plan dudit organe (O) et comprenant une seconde extrémité opposée à la première extrémité et munie d'une partie conformée (PC), sensiblement en forme de L orienté vers ladite première extrémité, et propre à recevoir étroitement un bord (BP) dudit plateau.

12. Dispositif selon l'une des revendications 7 et 8, **caractérisé en ce que** ladite tige de support (SS) est constituée de première (SS1) et seconde (SS2) parties complémentaires assemblées et dans lesquelles sont respectivement définies les premières ouvertures (O1) et les secondes ouvertures (O2).

13. Dispositif selon la revendication 12, **caractérisé en ce que** lesdites première (SS1) et seconde (SS2) parties sont assemblées l'une à l'autre, par l'une de leurs extrémités opposées, par l'intermédiaire d'un axe de rotation (AR).

14. Dispositif selon l'une des revendications 12 et 13, **caractérisé en ce que** les première (SS1) et seconde (SS2) parties comportent chacune une extrémité (EI) munie d'une partie terminale (PI1, PI2) recourbée vers l'intérieur de la structure (SS), sensiblement à 90°, ces deux parties terminales (PI1, PI2) définissant avec des parties latérales (PL1, PL2) desdites première (SS1) et seconde (SS2) parties deux parties complémentaires d'un logement (LO) propre à recevoir une partie d'un rail (RL) solidarisé audit organe (O), en vue de solidariser ladite tige de support (SS) audit organe (O).

15. Dispositif selon la revendication 14, **caractérisé en ce qu'** il comprend des moyens de fixation (CH) propres à solidariser l'une à l'autre lesdites extrémités (EI) des première (SS1) et seconde (SS2) parties, en amont desdites parties terminales (PI1, PI2), en vue d'immobiliser ladite tige de support (SS) sur ledit rail (RL).

16. Dispositif selon l'une des revendications 1 à 15, **caractérisé en ce que** ladite structure de support (SS) est réalisée dans un matériau métallique.

17. Dispositif selon l'une des revendications 1 à 16, **caractérisé en ce que** ledit bras de liaison (BL) est une tige sensiblement linéaire.

18. Dispositif selon l'une des revendications 1 à 17, **caractérisé en ce que** ledit bras de liaison (BL) comprend une première extrémité (EB1), opposée à sa seconde extrémité (EB2), munie d'un axe de rotation sur lequel est monté ledit élément (E).

19. Dispositif selon l'une des revendications 1 à 18, **caractérisé en ce que** ledit bras de liaison (BL) est réalisé dans un matériau métallique.

20. Dispositif selon l'une des revendications 1 à 19, **caractérisé en ce que** ledit élément (E) est choisi dans un groupe comprenant un écran d'ordinateur, un écran de télévision, et un panneau d'affichage de données d'information et/ou de publicité.

21. Meuble de bureau comprenant au moins un organe (O), **caractérisé en ce qu'**il est équipé d'au moins un dispositif de support (D) selon l'une des revendications précédentes, propre à être solidarisé audit organe (O).
